# EUROPÄISCHE PATENTSCHRIFT

(11) **EP 2 690 338 B1**
(45) Veröffentlichungstag und Bekanntmachung des Hinweises auf die Patenterteilung: **22.07.2015**
(21) Anmeldenummer: 12005476.2
(22) Anmeldetag: 27.07.2012
(51) Int. Cl.: F16L 23/10, F16L 23/08

(54) **Rohrschelle, insbesondere Profilschelle**
Pipe clamp, in particular profile clamp
Collier, en particulier bride de fixation

(43) Veröffentlichungstag der Anmeldung: 29.01.2014
(73) Patentinhaber: NORMA Germany GmbH, 63477 Maintal (DE)
(72) Erfinder: von Breitenbach, Gerrit, D-63791 Karlstein (DE); Kamp, Achim, D-63505 Langenselbold (DE); Wachter, Gerhard, D-63654 Büdingen (DE); Heywood, Jonathan, Tadley, Hants. RG26 3YH (GB)
(74) Vertreter: Patentanwälte Olbricht Buchhold Keulertz

(56) Entgegenhaltungen:
- WO-A1-03/069204
- DE-U1- 8 806 714
- FR-A1- 2 863 335
- GB-A- 447 963

## Beschreibung

Die Erfindung betrifft eine Rohrschelle, insbesondere eine Profilschelle, mit einem Schellenband, das ein erstes Ende mit einem ersten Spannkopf und ein zweites Ende mit einem zweiten Spannkopf aufweist, wobei ein Spannelement durch den ersten Spannkopf geführt und im ersten Spannkopf durch ein Sicherungselement gegen Verlieren gesichert ist und das Spannelement mit dem zweiten Spannkopf in Eingriff bringbar ist, wobei das Sicherungselement als Federelement ausgebildet ist, das zwischen dem Spannelement und dem Spannkopf wirkt.

Eine derartige Rohrschelle wird um ein Rohr gelegt. Danach wird das Spannelement, das bereits durch den ersten Spannkopf geführt ist, mit dem zweiten Spannkopf in Eingriff gebracht und danach gespannt. Dadurch legt sich das Schellenband mit einer gewissen Spannung um das Rohr. Wenn die Rohrschelle als Profilschelle ausgebildet ist, dann hat das Schellenband einen etwa trapezförmigen Querschnitt, mit dem es über kegelstumpfförmige Flansche an Rohrenden gelegt wird. Durch das Spannen des Schellenbandes mit Hilfe des Spannelements, das vielfach als Schraube oder Bolzen ausgebildet ist, werden die kegelstumpfförmigen Flansche der Rohre zueinander hingezogen und gegeneinander verspannt.

Zur Montage muss das Schellenband geöffnet sein, damit die Rohrschelle über das Rohr und die kegelstumpfförmigen Flansche hinweg geführt werden kann. Damit in diesem geöffneten Zustand, in dem das Spannelement nicht mit dem zweiten Spannkopf in Eingriff steht, das Spannelement nicht verloren geht, ist eine Verliersicherung vorgesehen, die bislang als Kunststoffring ausgebildet ist. Dieser Kunststoffring wird auf das Spannelement aufgesteckt und hält dort unter Reibschluss oder, wenn das Spannelement als Schraube oder Bolzen mit Gewinde ausgebildet ist, sogar unter Formschluss. Die Montage der Verliersicherung ist relativ aufwändig. Darüber hinaus wird das Spannelement nur dagegen gesichert, aus dem ersten Spannkopf heraus zu fallen.

Eine Rohrschelle der eingangsgenannten Art ist aus DE 88 06 714 U1 bekannt. Das Spannelement ist als Gewindeschraube ausgebildet, die durch einen Spannkopf hindurchgeführt ist, wobei eine Gewindemutter auf das durchgeführte Ende der Spannschraube aufgeschraubt ist. Ein Federelement in Form eines Federbügels umgreift die Gewindemutter und den Spannkopf und hält in einem nicht geschlossenen Zustand die Spannschraube so, dass ihr Kopf radial außen am anderen Spannkopf anliegt. Der andere Spannkopf weist einen radial verlaufenden Schlitz auf, in dem die Spannschraube nach dem Schließen der Rohrschelle eingedrückt werden kann.

WO 03/069204 A1 beschreibt eine Kupplung zum Verbinden von zwei Rohrenden, die zwei Ringhälften aufweist, die an einem Ende über ein Scharnier miteinander verbunden sind. Die jeweils anderen Enden weisen Spannköpfe auf, die durch eine Hammerkopf- oder T-Bolzen-Schraube miteinander verbunden werden können. Die Querschenkel der HammerkopfSchraube sind mit Hilfe eines Federelements oder Drahtbügels gesichert, der für die Querschenkel zwei ringabschnittförmige Aufnahmen bildet, so dass die HammerkopfSchraube unverlierbar an den Spannkopf gehalten ist.

FR 2863335 A offenbart eine Rohrschelle gemäss dem Oberbegriff des Anspruchs 1, wobei das Sicherungselement als Federring ausgebildet ist und lediglich als Verliersicherung dient.

Der Erfindung liegt die Aufgabe zugrunde, eine einfache Verliersicherung für das Spannelement anzugeben, die auch nach der Montage noch wirksam ist.

Diese Aufgabe wird bei einer Rohrschelle gemäss Anspruch 1 gelöst.

Diese Ausgestaltung bewirkt zunächst, dass das Spannelement im ersten Spannkopf gegen ein Verlieren gesichert ist. Das als Federelement ausgebildete Sicherungselement erzeugt eine Federkraft zwischen dem Spann-element und dem ersten Spannkopf, die auch nach der Montage noch vorhanden ist und ist so dimensioniert ist, dass sie eine ausreichende Reibung zwischen dem Spannelement und dem ersten Spannkopf oder dem Federelement erzeugt, so dass ein versehentliches Lösen des Spannelements nach dem Wegfall einer Zugkraft auf das Spannelement verhindert wird. Auch nach erfolgter Montage wirkt das Federelement auf das Spannelement und erzeugt eine Federkraft zwischen dem Spannelement und dem ersten Spannkopf. Diese Federkraft generiert beispielsweise ein definiertes Widerstandsdrehmoment, um ungewolltes Drehen des Spannelements und das nachfolgende Verlieren zu verhindern. Wenn beispielsweise das Spannelement im zweiten Spannkopf nicht mehr gespannt gehalten wird, kann es durch Vibration, die in einem Kraftfahrzeug beispielsweise durch eine Verbrennungskraftmaschine ausgelöst werden, aus dem zweiten Spannkopf und später aus dem ersten Spannkopf herausfallen. Andererseits wird durch ein derartiges Federelement das Spannen des Spannelements nicht negativ beeinflusst. Wenn das Spannelement beispielsweise als Gewindebolzen ausgebildet ist, dann wird durch das Federelement das Anzugsmoment nicht merklich erhöht. Darüber hinaus kann man das Federelement verwenden, um das Spannelement gegen den ersten Spannkopf zu positionieren. Dies hat den Vorteil, dass das Spannelement im ersten Spannkopf eine definierte Position erhält, die die weitere Montage erleichtert. Diese Position gegenüber dem ersten Spannkopf ist allerdings nicht starr, weil das Federelement elastisch verformt werden kann. Man kann also das Spannelement nach wie vor auch relativ zum ersten Spannkopf bewegen, wenn dies erforderlich sein sollte.

Mit der Befestigungsgeometrie wird ein Formschluss zwischen dem Federelement und dem Spannelement erzeugt, der eine axiale (bezogen auf die Achse des Spannelements) Übertragung einer Federkraft vom Federelement auf das Spannelement erleichtert. Diese Federkraft kann dann verwendet werden, um die Ausrichtung des Spannelementes gegenüber dem ersten Spannkopf zu bewirken. Eine umlaufende Nut hat den Vorteil, dass die Drehwinkellage des Spannelements im ersten Spannkopf bei der Montage der Rohrschelle keine Rolle spielt. Die Nut kann dabei beispielsweise so ausgebildet sein, dass das Federelement mit einem kleinen Spiel in der Nut aufgenommen ist.

Vorzugsweise ist das Federelement als Biegeteil ausgebildet. Das Biegeteil kann als Drahtfeder oder als Blechbiege- oder als Stanzbiegeelement ausgebildet sein. Eine Drahtfeder besteht im Wesentlichen aus einem Draht, der eine bestimmte Form erhalten hat. Der Draht kann hierbei aus Metall gebildet sein. Es ist aber auch möglich, einen anderen Werkstoff zu verwenden. Ein Metalldraht hat in der Regel den Vorteil einer höheren Temperaturbeständigkeit, so dass man eine mit einem Metalldraht-Federelement ausgerüstete Rohrschelle beispielsweise auch im Bereich einer Kraftfahrzeug-Abgasleitung verwenden kann. Das Material richtet sich nach der gewünschten Anwendung. Der Querschnitt des Drahtes kann kreisförmig, elliptisch, rechteckförmig, quadratisch, polygonförmig oder von beliebiger Form sein.

Bevorzugterweise richtet das Federelement das Spannelement in eine vorbestimmte Ausrichtung zum ersten Spannkopf aus. Diese Ausrichtung kann beispielsweise so gewählt sein, dass das Spannelement dann, wenn die Rohrschelle über das Rohr geführt worden ist, unmittelbar auf eine Öffnung im zweiten Spannkopf zielt, mit der es in Eingriff treten soll. In diesem Fall ist es in der Regel erforderlich, dass das Federelement das Spannelement mit einer vorbestimmten Neigung zum Spannelement ausrichtet. Eine andere Möglichkeit besteht darin, dass das Federelement das Spannelement unter einem rechten Winkel zum ersten Spannkopf ausrichtet. Die genaue Ausrichtung richtet sich nach dem gewünschten Anwendungszweck.

Federelements am Spannelement. Das Federelement kann seitlich auf das Spannelement aufgeschoben werden. Beim Aufschieben werden die beiden Federbügel etwas auseinander gespreizt. Sie federn zusammen, wenn das Federelement soweit auf das Spannelement aufgeschoben worden ist, dass sich das Spannelement im Aufnahmeraum befindet. Die Federwirkung kann über den Verbindungsbügel realisiert werden. Die beiden Federbügel können im Bereich des Aufnahmeraumes beispielsweise eine Auswölbung aufweisen.

Vorzugsweise ist der Verbindungsbügel länger als ein kleinster Abstand zwischen den Federbügeln. Ein längerer Verbindungsbügel ist weniger empfindlich gegen eine plastische Verformung. Wenn der Verbindungsbügel länger ist als der kleinste Abstand zwischen den Federbügeln, dann ist das Risiko einer Beschädigung des Federelements bei der Montage relativ gering.

Hierbei ist bevorzugt, dass der Verbindungsbügel länger ist als ein größter Abstand zwischen den Federbügeln im Aufnahmeraum. Der Verbindungsbügel erhält damit eine relativ große Länge, so dass die beiden Federbügel problemlos über das Spannelement geschoben werden können, ohne dass das Risiko einer plastischen Deformation besteht.

Vorzugsweise ist der Verbindungsbügel über Bogenabschnitte mit den Federbügeln verbunden. Damit kann man die Länge des Verbindungsbügels auf einfache Weise vom Abstand der Federbügel entkoppeln. Die Bogenabschnitte, die beispielsweise einen Bogen von mehr als 90°, vorzugsweise mehr als 150°, bilden, können von den Enden des Verbindungsbügels wieder relativ weit nach innen führen, um dort in die Federbügel überzugehen.

Bevorzugterweise sind die Federbügel im Bereich des Aufnahmeraums in einer ersten Ebene angeordnet und mindestens ein Federbügel ist mit einem Endabschnitt verbunden, der relativ zu der ersten Ebene geneigt oder versetzt ist. Mit der Neigung dieses Endabschnitts lässt sich dann auf einfache Weise eine Situation erzeugen, in der das Federelement eine Federkraft zwischen dem Spannkopf und dem Spannelement erzeugen kann. Der Endabschnitt liegt dann am Spannkopf an und wird in gewissem Umfang verformt, wenn das Federelement mit dem Spannelement in Eingriff gebracht wird. Die dadurch erzeugte Federkraft bewirkt dann die gewünschte Ausrichtung des Spannelements zum ersten Spannkopf.

Vorzugsweise ist der Verbindungsabschnitt außerhalb der ersten Ebene angeordnet. Man kann dann auch den Verbindungsabschnitt verwenden, um eine Situation zu erzeugen, in der zwischen dem ersten Spannkopf und dem Spannelement eine Federkraft wirkt.

Vorzugsweise liegen Kontaktpunkte des Federelements mit dem ersten Spannkopf in der gleichen, einer parallel versetzten oder in einer zu der ersten Ebene schief gestellten zweiten Ebene. In diesem Fall ist es möglich, dass das Federelement an zwei Positionen am ersten Spannkopf anliegt. Diese zwei Positionen liegen in einer gemeinsamen Ebene, der zweiten Ebene, die durch eine innere Anlagefläche des ersten Spannkopfs gebildet wird. Die Ebene, in der der Aufnahmeraum angeordnet ist, bestimmt die Lage der Achse des Spannelementes, weil die Ebene des Aufnahmeraums, die erste Ebene, senkrecht auf der Achse des Spannelements steht. Der vorbestimmte Winkel zwischen der ersten Ebene und der zweiten Ebene entspricht dann dem Winkel, mit dem die Winkellage der Achse von einem rechten Winkel auf die Innenseite des ersten Spannkopfes abweicht.

Vorzugsweise ist der Endabschnitt über einen Federarm mit dem Federbügel verbunden, wobei der Federarm relativ zu der ersten Ebene weg vom Spannkopf geneigt ist. Wenn man einen Federarm verwendet, dann kann man die federnde Länge zwischen dem Federbügel und dem Endabschnitt vergrößern, was sich günstig auf die elastische Verformung des Federelements auswirkt. Da der Federarm relativ zu der ersten Eben weg vom Spannkopf geneigt ist, kann man hier eine relativ große Länge vorsehen.

Bevorzugterweise erstreckt sich der Federarm von einem dem Verbindungsbügel abgewandten Ende des Federbügels zum Verbindungsbügel hin. Auch dadurch lässt sich eine relativ große Länge des Federbügels erreichen.

Bevorzugterweise erstreckt sich der Federarm über den Aufnahmeraum hinaus. Er kann sich sogar soweit erstrecken, dass er den Bogenabschnitt oder sogar den Verbindungsbügel zumindest teilweise überdeckt. Damit ist eine sehr große Länge des Federarms sichergestellt, was sich günstig auf die Federeigenschaften des Federelementes auswirkt. Die Gefahr einer plastischen Verformung des Federelements, mit dem dann die gewünschte Ausrichtung des Spannelements relativ zum ersten Spannkopf erreicht werden soll, kann dann klein gehalten werden.

Die Erfindung wird im Folgenden anhand von bevorzugten Ausführungsbeispielen in Verbindung mit der Zeichnung beschrieben. Hierin zeigen:
- Fig. 1: eine Profilschelle in Seitenansicht,
- Fig. 2: ein Federelement in Draufsicht,
- Fig. 3: das Federelement in Seitenansicht,
- Fig. 4: das Federelement in Vorderansicht,
- Fig. 5: ein Spannelement,
- Fig. 6: eine schematisierte Darstellung zur Erläuterung der Anordnung von Federelement, Spannelement und Spannkopf,
- Fig. 7: eine zweite Ausführungsform eines Federelements, in Draufsicht,
- Fig. 8: das Federelement von Fig. 7 in Seitenansicht und
- Fig. 9: das Federelement von Fig. 9 in Vorderansicht.

Eine Rohrschelle 1, die im vorliegenden Fall als Profilschelle ausgebildet ist, weist ein Schellenband auf, das im vorliegenden Fall zwei Halbschalen 2, 3 aufweist, die durch eine federnde Brücke 4 miteinander verbunden sind. Die beiden Halbschalen 2, 3 weisen im Querschnitt etwa eine Trapezform auf, wie dies von Profilschellen her bekannt ist. Man kann auch ein einstückig ausgebildetes Schellenband verwenden.

Die erste Halbschale 2 weist ein erstes Ende 5 mit einem ersten Spannkopf 6 auf. Die zweite Halbschale weist ein zweites Ende 7 mit einem zweiten Spannkopf 8 auf. Ein Spannelement 9 in Form einer Gewindeschraube ist durch den ersten Spannkopf 6 hindurchgeführt. Ein Federelement 10 steht in Eingriff mit dem Spannelement 9, wie weiter unten erläutert werden wird, und wirkt zwischen dem Spannelement 9 und dem ersten Spannkopf 6. Das Spannelement 9 ist mit dem zweiten Spannkopf 8 in Eingriff bringbar. Am zweiten Spannkopf 8 ist hierzu eine Mutter 11 vorgesehen, in die das Spannelement 9 eingeschraubt werden kann.

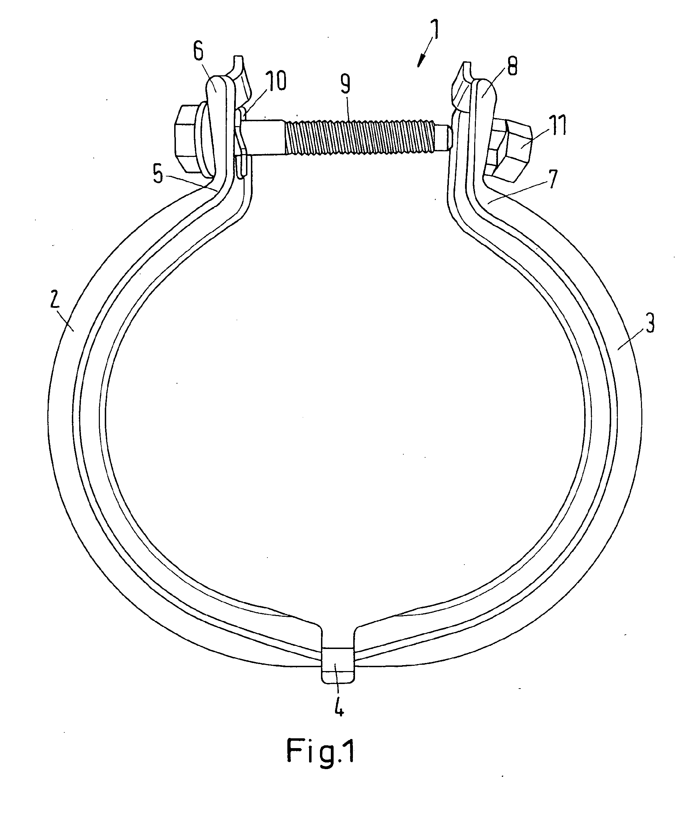

Zur Montage einer derartigen Rohrschelle müssen die beiden Halbschalen 2, 3 auseinander geklappt werden, so dass zwischen dem Spannelement 9 und dem zweiten Spannkopf 8 eine Öffnung entsteht, die so groß ist, dass die Rohrschelle 1 über ein Rohr geführt werden kann, an dem die Rohrschelle 1 montiert werden soll. Die Brücke 4 ist dabei so ausgelegt, dass die beiden Halbschalen 2, 3 etwa die in Fig. 1 dargestellte Position zueinander einnehmen, wenn die Rohrschelle an ihrem Montageort positioniert worden ist. Der Monteur muss dann lediglich das Spannelement 9 mit dem zweiten Spannkopf 8 in Eingriff bringen, im vorliegenden Fall also die Schraube in die Mutter 11 einschrauben, um die Rohrschelle 1 zu spannen.

Es ist in Fig. 1 ohne Weiteres zu erkennen, dass in diesem Zustand die beiden Spannköpfe 6, 8 nicht parallel zueinander ausgerichtet sind. Dies würde an und für sich das Einfädeln des Spannelements 9 in den zweiten Spannkopf 8 erschweren. Im vorliegenden Fall sorgt allerdings das Federelement 10 für eine Ausrichtung des Spannelements 9 gegenüber dem ersten Spannkopf 6, die so gewählt ist, dass das Spannelement auf die Mutter 11 im zweiten Spannkopf 8 zielt. Wenn die Rohrschelle 1 in der gewünschten Montageposition positioniert worden ist, muss der Monteur nur noch die beiden Halbschalen 2, 3 zusammendrücken, so dass die beiden Spannköpfe 6, 8 sich einander annähern. In diesem Fall lässt sich das Spannelement 9 ohne größere Zusatztätigkeiten mit der Mutter 9 am zweiten Spannkopf 8 in Eingriff bringen, so dass die Rohrschelle 1 dann gespannt werden kann.

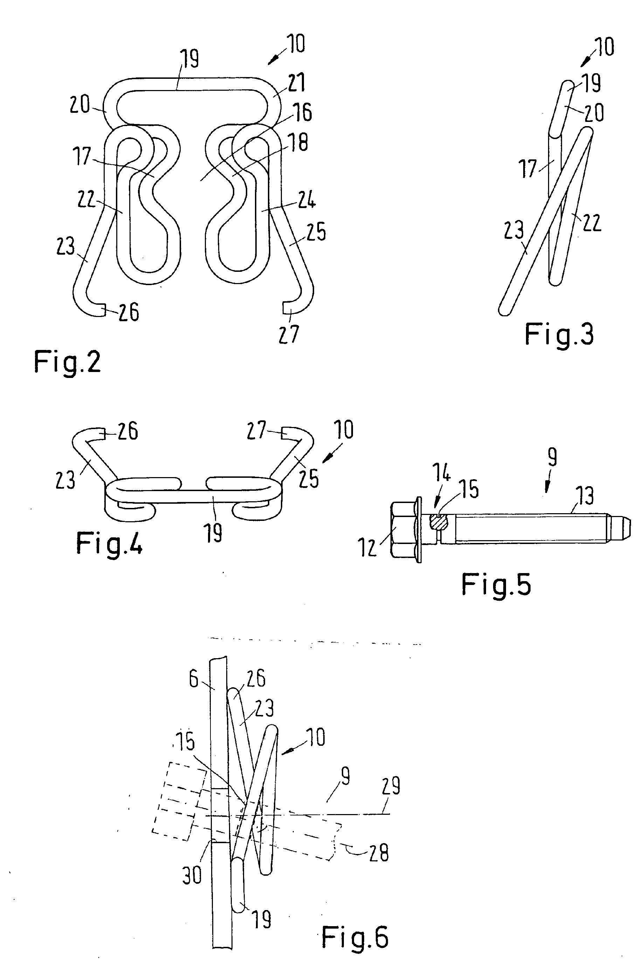

Die Fig. 2 bis 6 erläutern nun mit weiteren Einzelheiten, wie eine derartige Ausrichtung erzielt werden kann.

Fig. 5 zeigt das Spannelement 9, das, wie gesagt, als Schraube ausgebildet ist, mit einem Kopf 12 und einem Gewindeabschnitt 13. Der Kopf 12 kann in an und für sich bekannter Weise eine Drehmomentangriffsfläche aufweisen, beispielsweise einen Außen- oder Innensechskant.

Zwischen dem Kopf 12 und dem Gewindeabschnitt 13 ist eine Befestigungsgeometrie 14 vorgesehen, die im vorliegenden Fall als umlaufende Nut 15 ausgebildet ist. Andere Befestigungsgeometrien sind möglich, beispielsweise ein Vorsprung zwischen dem Kopf 12 und dem Gewindeabschnitt 13.

Das Federelement 10 ist in den Fig. 2 bis 4 näher dargestellt. Das Federelement 10 weist einen Aufnahmeraum 16 auf, der von zwei Federbügeln 17, 18 begrenzt ist. Die beiden Federbügel 17, 18 sind im Bereich des Aufnahmeraumes 16 in einer Ebene angeordnet, wie dies beispielsweise in Fig. 3 zu erkennen ist. Die Federbügel 17, 18 weisen in dieser Ebene eine Ausbuchtung auf, die dann den Aufnahmeraum 16 bildet. Der Aufnahmeraum 16 hat im entspannten Zustand des Federelements 10 einen Durchmesser, der etwas kleiner ist als der Durchmesser des Spannelements 9 zwischen dem Kopf 12 und dem Gewindeabschnitt 13. Der Durchmesser des Aufnahmeraums 16 kann dem Durchmesser des Spannelements 9 im Bereich der Nut 15 entsprechen. Er kann aber auch geringfügig kleiner sein, so dass das Federelement 10 mit einer gewissen Spannung der Federbügel 17, 18 auf dem Spannelement 9 befestigt werden kann.

Die beiden Federbügel 17, 18 sind durch einen Verbindungsbügel 19 miteinander verbunden. Der Verbindungsbügel 19 geht über einen Bogenabschnitt 20 in den Verbindungsbügel 17 über und geht über einen Bogenabschnitt 21 in den Verbindungsbügel 18 über. Die Bogenabschnitte 20, 21 erstrecken sich über etwa 180°.

Der Verbindungsabschnitt 19 weist eine relativ große Länge auf. Er ist länger als der kleinste Abstand zwischen den Federbügeln 17, 18 und er ist sogar länger als der größte Abstand zwischen den Federbügeln 17, 18 im Bereich des Aufnahmeraums 16. Die beiden Bogenabschnitte 20, 21 können seitlich über die Federbügel 17, 18 überstehen. Dadurch wird die Gefahr einer plastischen Verformung des Verbindungsbügels, wenn das Federelement 10 auf das Spannelement 9 aufgeschoben wird, klein gehalten. Die Federeigenschaften bleiben vielmehr erhalten.

Der Federbügel 17 ist über einen Federarm 22 mit einem Endabschnitt 23 verbunden. Der Federbügel 18 ist über einen Federarm 24 mit einem Endabschnitt 25 verbunden. Die beiden Endabschnitte 23, 25 können einwärts gebogene Füße 26, 27 aufweisen.

Wie in Fig. 3 zu erkennen ist, sind die Endabschnitte 23, 25 relativ zu der Ebene geneigt, in der die beiden Federbügel 17, 18 angeordnet sind. Diese Ebene wird im Folgenden als "erste Ebene" bezeichnet. Die Endabschnitte 23, 25 stehen dabei in Richtung auf den ersten Spannkopf 6 vor, so dass die Füße 26, 27 an der Innenseite des ersten Spannkopfs 6, also der Seite, die dem zweiten Spannkopf 8 zugewandt ist, anliegen.

Der Verbindungsbügel 19 ist, wie dies in Fig. 13 zu erkennen ist, außerhalb der ersten Ebene angeordnet. Er ist relativ zu der ersten Ebene in die entgegen gesetzte Richtung versetzt wie die Füße 26, 27. Dementsprechend sind die beiden Bogenabschnitte 20, 21 relativ zu der ersten Ebene geneigt. Die Neigung kann dabei einen anderen Winkel haben als die Neigung der Endabschnitte 23, 25.

Wie in Fig. 6 zu erkennen ist, liegen der Verbindungsbügel 19 und die Füße 26 in einer gemeinsamen zweiten Ebene. Diese zweite Ebene wird durch die Innenseite des ersten Spannkopfs 6 gebildet. Das Spannelement 9 steht mit seiner Achse 28 senkrecht auf der ersten Ebene, die durch die beiden Federbügel 17, 18 im Bereich des Aufnahmeraumes 16 gebildet wird. Da die erste Ebene und die zweite Ebene einen vorbestimmten Winkel miteinander einschließen, schließt auch die Achse 28 des Spannelements 9 mit einer Achse 29 einer Öffnung 30 im ersten Spannkopf 6 diesen Winkel ein. Die Achse 29 steht senkrecht zum ersten Spannkopf 6, so dass das Spannelement 9, wie dies in Fig. 1 zu erkennen ist, eine vorbestimmte Ausrichtung relativ zum ersten Spannkopf 6 erhält, die es ermöglicht, das Spannelement mit geringem Aufwand in den zweiten Spannkopf 8 einzufädeln und dann mit dem zweiten Spannkopf 8 in Eingriff zu bringen.

Die Federarme 22, 24 sind, wie dies in Fig. 3 zu erkennen ist, gegenüber der ersten Ebene geneigt und zwar in die gleiche Richtung, wie die Bogenabschnitte 20, 21. Auch der Neigungswinkel kann der Gleiche sein. Dies ist aber nicht unbedingt erforderlich.

Die Federarme 22, 24 erstrecken sich von einem dem Verbindungsbügel 19 abgewandten Ende der Federbügel 17, 18 wieder zum Verbindungsbügel 19 hin. Dabei erstrecken sie sich sogar über den Aufnahmeraum 16 hinaus und können sogar die Bogenabschnitte 20, 21 zumindest teilweise überdecken. Damit ist es möglich, den Federarmen 22, 24 eine relativ große Länge mitzugeben, was sich günstig auf die Federeigenschaften des Federelements 10 auswirkt. Auch die Endabschnitte 23, 25 können dann relativ lang gemacht werden.

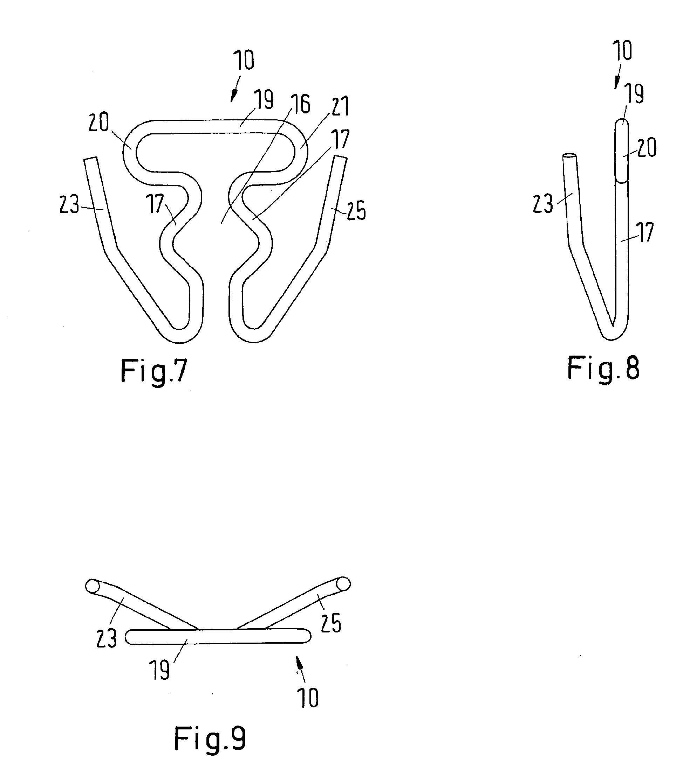

Die Fig. 7 bis 9 zeigen eine vereinfachte Ausgestaltung eines Federelements 10, bei der gleiche Elemente wie in den Fig. 2 bis 4 mit den gleichen Bezugszeichen versehen sind. Bei dieser Ausgestaltung sind die Endabschnitte 23, 25 direkt mit den Federbügeln 17, 18 verbunden. Mit einem derartigen Federelement 10 ist es möglich, das Spannelement 9 etwa unter einem rechten Winkel zum ersten Spannkopf 6 auszurichten. Zur Montage ist es dann lediglich erforderlich, die Spitzen des Spannelements 9 radial (bezogen auf die Ausrichtung der Rohrschelle 1) nach innen zu drücken, um das Spannelement 9 in Eingriff mit dem zweiten Spannkopf 8 zu bringen. Bei relativ kurzen Spannelementen 9 mit Suchzapfen ist auch ohne Herunterdrücken des Spannelements 9 das Einführen in den zweiten Spannkopf 8 möglich.

Das Federelement ist als Drahtfeder ausgebildet. Mit anderen Worten wird ein Draht, der federnde Eigenschaften aufweist, also ein Federdraht, in die Form des Federelements gebogen. Der Draht kann als Metalldraht ausgebildet sein, was sich empfiehlt, wenn die Rohrschelle unter hohen Umgebungstemperaturen eingesetzt werden soll. Der Draht kann aber auch aus Kunststoff oder aus anderen Materialien ausgebildet sein, wenn beispielsweise die Umgebungstemperaturen am Einsatzort niedrig sind. Der Querschnitt des Drahtes kann beliebig gewählt werden. Anstelle eines Federelements 10 aus Draht, also eines Draht-Biegeteils, kann man auch ein Blechbiege- oder Stanzbiegeteil als Federelement verwenden.

Das Federelement 10 erzeugt neben einer axialen auch eine radiale Vorspannung auf das Spannelement 9, bezogen auf die Achse des Spannelements 9. Wenn das Spannelement 9 als Schraubbolzen ausgebildet ist, dann erzeugt das Federelement 10 ein definiertes Widerstandsdrehmoment, um ungewolltes Lösen des Spannelements 9 zu verhindern. Wenn beispielsweise das Spannelement 9 mit der Gewindemutter 11 zwar noch in Eingriff steht, die axiale Spannkraft aber nicht mehr in ausreichendem Maße vorhanden ist, dann können Vibrationen, wie sie beispielsweise in einem Kraftfahrzeug durch den Motor verursacht werden, dazu führen, dass sich das Spannelement 9 aus dem ersten Spannkopf 6 herausdreht. Dies wird durch das Federelement 10 verhindert, weil das Federelement 10 eine ausreichende axiale bzw. radiale Spannkraft auf das Spannelement 9 ausübt. Andererseits erschwert das Federelement 10 die Montage des Spannelementes 9 nicht, weil das Anzugsmoment, das man zum Drehen des Schraubbolzens benötigt, nicht nennenswert erhöht wird. Darüber hinaus ergeben sich bei der Montage Erleichterungen, weil das Spannelement 9 in gewissen Grenzen vorpositioniert werden kann.

## Patentansprüche

1. Rohrschelle (1), insbesondere Profilschelle, mit einem Schellenband (2, 3), das ein erstes Ende (5) mit einem ersten Spannkopf (6) und ein zweites Ende (7) mit einem zweiten Spannkopf (8) aufweist, wobei ein Spannelement (9) durch den ersten Spannkopf (6) geführt und im ersten Spannkopf (6) durch ein Sicherungselement gegen Verlieren gesichert ist und das Spannelement (9) mit dem zweiten Spannkopf (8) in Eingriff bringbar ist, wobei das Sicherungselement als Federelement (10) ausgebildet ist, das zwischen dem Spannelement (9) und dem ersten Spannkopf (6) wirkt, wobei das Federelement (10) in eine als umlaufende Nut (15) ausgebildete Befestigungsgeometrie (14) am Spannelement (9) eingreift, **dadurch gekennzeichnet, dass** das Federelement (10) eine Federkraft zwischen dem Spannelement und dem ersten Spannkopf (6) erzeugt, die auch im montierten Zustand vorhanden ist.

2. Rohrschelle nach Anspruch 1, **dadurch gekennzeichnet, dass** das Federelement (10) als Biegeteil ausgebildet ist.

3. Rohrschelle nach Anspruch 1 oder 2, **dadurch gekennzeichnet, dass** das Federelement (10) das Spannelement (9) in eine vorbestimmte Ausrichtung zum ersten Spannkopf (6) ausrichtet.

4. Rohrschelle nach einem der Ansprüche 1 bis 3, **dadurch gekennzeichnet, dass** das Federelement (10) einen Aufnahmeraum (16) für das Spannelement (9) aufweist, der von zwei Federbügeln (17, 18) begrenzt ist, wobei der Aufnahmeraum (16) eine Einführöffnung aufweist und die Federbügel (17, 18) auf der der Einführöffnung gegenüberliegenden Seite mit einem Verbindungsbügel (19) miteinander verbunden sind.

5. Rohrschelle nach Anspruch 4, **dadurch gekennzeichnet, dass** der Verbindungsbügel (19) länger ist als ein kleinster Abstand zwischen den Federbügeln (17, 18).

6. Rohrschelle nach Anspruch 5, **dadurch gekennzeichnet, dass** der Verbindungsbügel (19) länger ist als ein größter Abstand zwischen den Federbügeln (17, 18) im Aufnahmeraum (16).

7. Rohrschelle nach Anspruch 5 oder 6, **dadurch gekennzeichnet, dass** der Verbindungsbügel (19) über Bogenabschnitte (20, 21) mit den Federbügeln (17, 18) verbunden ist.

8. Rohrschelle nach einem der Ansprüche 4 bis 7, **dadurch gekennzeichnet, dass** die Federbügel (17, 18) im Bereich des Aufnahmeraums (16) in einer ersten Ebene angeordnet sind und mindestens ein Federbügel mit einem Endabschnitt (23, 25) verbunden ist, der relativ zu der ersten Ebene geneigt oder versetzt ist.

9. Rohrschelle nach Anspruch 8, **dadurch gekennzeichnet, dass** der Verbindungsbügel (19) außerhalb der ersten Ebene angeordnet ist.

10. Rohrschelle nach Anspruch 9, **dadurch gekennzeichnet, dass** Kontaktpunkte des Federelements (10) mit dem ersten Spannkopf (6) in der gleichen, parallel versetzten oder in einer zu der ersten Ebene schief gestellten zweiten Ebene liegen.

11. Rohrschelle nach einem der Ansprüche 8 bis 10, **dadurch gekennzeichnet, dass** der Endabschnitt (23, 25) über einen Federarm (22, 24) mit dem Federbügel (17, 18) verbunden ist, wobei der Federarm (22, 24) relativ zu der ersten Ebene weg vom ersten Spannkopf (6) geneigt ist oder mit der ersten Ebene übereinstimmt.

12. Rohrschelle nach Anspruch 11, **dadurch gekennzeichnet, dass** sich der Federarm (22, 24) von einem dem Verbindungsbügel (19) abgewandten Ende des Federbügels (17, 18) zum Verbindungsbügel (19) hin erstreckt.

13. Rohrschelle nach Anspruch 12, **dadurch gekennzeichnet, dass** sich der Federarm (22, 24) über den Aufnahmeraum (16) hinaus erstreckt.

## Claims

1. Pipe clamp (1), in particular a profile clamp, comprising a clamping strip (2, 3) having a first end (5) which has a first tensioning head (6) and a second end (7) which has a second tensioning head (8), a tensioning element (9) being guided through the first tensioning head (6) and being secured against loss in the first tensioning head (6) by means of a securing element, and it being possible for the tensioning element (9) to engage with the second tensioning head (8), the securing element being designed as a spring element (10) which acts between the tensioning element (9) and the first tensioning head (6), the spring element (10) engaging in a fastening geometry (14) on the tensioning element (9) which is designed as a circumferential groove (15), **characterised in that** the spring element (10) generates a spring force between the tensioning element and the first tensioning head (6), said spring force also being present in the mounted state.

2. Pipe clamp according to claim 1, **characterised in that** the spring element (10) is formed as a bent part.

3. Pipe clamp according to either claim 1 or claim 2, **characterised in that** the spring element (10) orients the tensioning element (9) in a predefined orientation in relation to the first tensioning head (6).

4. Pipe clamp according to any of claims 1 to 3, **characterised in that** the spring element (10) has a space (16) which is intended for receiving the tensioning element (9) and is delimited by two spring clips (17, 18), the receiving space (16) having an insertion opening and the spring clips (17, 18) being interconnected on the opposite side to the insertion opening by means of a connecting bow (19).

5. Pipe clamp according to claim 4, **characterised in that** the connecting bow (19) is longer than a minimum distance between the spring clips (17, 18).

6. Pipe clamp according to claim 5, **characterised in that** the connecting bow (19) is longer than a maximum distance between the spring clips (17, 18) in the receiving space (16).

7. Pipe clamp according to either claim 5 or claim 6, **characterised in that** the connecting bow (19) is connected to the spring clips (17, 18) by means of arcuate portions (20, 21).

8. Pipe clamp according to any of claims 4 to 7, **characterised in that** the spring clips (17, 18) in the region of the receiving space (16) are arranged in a first plane and at least one spring clip is connected to an end portion (23, 25) which is inclined or offset in relation to the first plane.

9. Pipe clamp according to claim 8, **characterised in that** the connecting bow (19) is arranged outside the first plane.

10. Pipe clamp according to claim 9, **characterised in that** points where the spring element (10) contacts the first tensioning head (6) are either in the same plane, a plane which is offset in a parallel manner or a second plane which is slanted in relation to the first plane.

11. Pipe clamp according to any of claims 8 to 10, **characterised in that** the end portion (23, 25) is connected to the spring clip (17, 18) by means of a spring arm (22, 24), the spring arm (22, 24) being inclined away from the first tensioning head (6) in relation to the first plane or coinciding with the first plane.

12. Pipe clamp according to claim 11, **characterised in that** the spring arm (22, 24) extends from an end of the spring clip (17, 18) which faces away from the connecting bow (19), to the connecting bow (19).

13. Pipe clamp according to claim 12, **characterised in that** the spring arm (22, 24) extends beyond the receiving space (16).

## Revendications

1. Collier de serrage (1), en particulier bride de fixation, comprenant une attache de collier (2, 3), qui présente une première extrémité (5) avec une première tête de serrage (6) et une seconde extrémité (7) avec une seconde tête de serrage (8), dans lequel un élément de serrage (9) est guidé par la première tête de serrage (6) et est sécurisé contre toute perte dans la première tête de serrage (6) par un élément de fixation et l'élément de serrage (9) peut être amené en prise avec la seconde tête de serrage (8), dans lequel l'élément de fixation se présente sous la forme d'un élément à ressort (10), qui agit entre l'élément de serrage (9) et la première tête de serrage (6), dans lequel l'élément à ressort (10) s'engage dans une géométrie de fixation (14) sous la forme d'une rainure périphérique (15) sur l'élément de serrage (9), **caractérisé en ce que** l'élément à ressort (10) produit entre l'élément de serrage et la première tête de serrage (6) une force élastique qui est présente même à l'état monté.

2. Collier de serrage selon la revendication 1, **caractérisé en ce que** l'élément à ressort (10) est conformé en pièce repliée.

3. Collier de serrage selon la revendication 1 ou la revendication 2, **caractérisé en ce que** l'élément à ressort (10) oriente l'élément de serrage (9) dans une orientation prédéterminée par rapport à la première tête de serrage (6).

4. Collier de serrage selon l'une quelconque des revendications 1 à 3, **caractérisé en ce que** l'élément à ressort (10) présente pour l'élément de serrage (9) un espace récepteur (16), qui est délimité par deux étriers de ressort (17, 18), dans lequel l'espace récepteur (16) présente une ouverture d'entrée et les étriers de ressort (17, 18) sont liés l'un à l'autre par un étrier de liaison (19) sur la face opposée à l'ouverture d'entrée.

5. Collier de serrage selon la revendication 4, **caractérisé en ce que** l'étrier de liaison (19) est plus long que le plus petit intervalle entre les étriers de ressort (17, 18).

6. Collier de serrage selon la revendication 5, **caractérisé en ce que** l'étrier de liaison (19) est plus long que le plus grand intervalle entre les étriers de ressort (17, 18) dans l'espace récepteur (16).

7. Collier de serrage selon la revendication 5 ou la revendication 6, **caractérisé en ce que** l'étrier de liaison (19) est raccordé aux étriers de ressort (17, 18) via des sections incurvées (20, 21).

8. Collier de serrage selon l'une quelconque des revendications 4 à 7, **caractérisé en ce que** les étriers de ressort (17, 18) sont aménagés dans la zone de l'espace récepteur (16) dans un premier plan et au moins un étrier de ressort est relié à une section d'extrémité (23, 25) qui est inclinée ou décalée par rapport au premier plan.

9. Collier de serrage selon la revendication 8, **caractérisé en ce que** l'étrier de liaison (19) est aménagé à l'extérieur du premier plan.

10. Collier de serrage selon la revendication 9, **caractérisé en ce que** des points de contact de l'élément à ressort (10) avec la première tête de serrage (6) se trouvent dans le même deuxième plan, dans un deuxième plan décalé parallèlement ou dans un deuxième plan situé en oblique par rapport au premier plan.

11. Collier de serrage selon l'une quelconque des revendications 8 à 10, **caractérisé en ce que** la section d'extrémité (23, 25) est reliée à l'étrier de ressort (17, 18) via un bras à ressort (22, 24), dans lequel le bras à ressort (22, 24) est incliné par rapport au premier plan en s'écartant de la première tête de serrage (6) ou coïncide avec le premier plan.

12. Collier de serrage selon la revendication 11, **caractérisé en ce que** le bras à ressort (22, 24) s'étend d'une extrémité de l'étrier de ressort (17, 18) opposée à l'étrier de liaison (19) à l'étrier de liaison (19).

13. Collier de serrage selon la revendication 12, **caractérisé en ce que** le bras de ressort (22, 24) s'étend au-delà de l'espace récepteur (16).
